# FASCICULE DE BREVET EUROPEEN

(11) **EP 1 042 890 B1**
(45) Date de publication et mention de la délivrance du brevet: **22.06.2005**
(21) Numéro de dépôt: 97952965.8
(22) Date de dépôt: 22.12.1997
(51) Int. Cl.: H04L 29/06

(54) **PROCEDES ET DISPOSITIFS DE TRANSMISSION ET D'AFFICHAGE DE DONNEES**
VERFAHREN UND VORRICHTUNGEN ZUR DATENÜBERTRAGUNG UND ANZEIGUNG
METHODS AND DEVICES FOR TRANSMITTING AND DISPLAYING DATA

(43) Date de publication de la demande: 11.10.2000
(73) Titulaire: Ideogram Design S.A.R.L., 06560 Valbonne (FR)
(72) Inventeur: LEBRUN, Paul, F-06220 Le Bar sur Loup (FR)
(74) Mandataire: Hautier, Jean-Louis
(86) Numéro de dépôt international: PCT/FR1997/002372
(87) Numéro de publication internationale: WO 1999/033241

(56) Documents cités:
- EP-A- 0 460 869
- EP-A- 0 646 856
- FR-A- 2 755 559
- US-A- 5 347 632
- GIFFORD D K ET AL: "THE APPLICATION OF DIGITAL BROADCAST COMMUNICATION TO LARGE SCALE INFORMATION SYSTEMS" IEEE JOURNAL ON SELECTED AREAS IN COMMUNICATIONS, vol. SAC-03, no. 3, mai 1985, pages 457-467, XP002041125 cité dans la demande

## Description

La présente invention a pour objet, d'une part, des procédés de transmission et d'affichage de données et, d'autre part, des dispositifs pour la mise en oeuvre de tels procédés.

Le document FR-A-2.648.299 propose un procédé et des dispositifs pour transmettre à des abonnés branchés sur un réseau de télécommunication numérique à grand débit, à partir d'un serveur central, des informations enregistrées dans une collection de disques numériques. Un dispositif selon l'invention comporte un serveur central connecté par une interface à un réseau de télécommunication numérique sur lequel sont branchés des postes d'abonnés. Le centre serveur comporte un ordinateur central, un magasin de disques numériques, des platines de lecture optique des disques et des moyens de transfert des disques entre le magasin et les platines de lecture, notamment un convoyeur et un dispositif de manutention commandés par un automate lui-même commandé par l'ordinateur central.
- EP-A-0.646.856 : Un dispositif de recherche d'information affiche des portions d'un document modifiable dynamiquement demandé par un utilisateur. Le dispositif a un contrôleur relié à un écran d'affichage, des commutateurs de sélection d'entrée tels que des boutons, et une mémoire telle qu'une mémoire flash non volatile. Un ou plusieurs documents, tels qu'un journal ou un magazine, est stocké dans la mémoire, un récepteur, tel qu'un dispositif d'appel, un modem ou récepteur radio FM, est relié à la mémoire pour la mettre à jour. Quand le dispositif est allumé, une première portion d'un document est affichée sur l'écran d'affichage. Quand l'utilisateur désire voir une autre partie du document, ou un autre document, il presse un des boutons. Suite à la détection de la pression sur le bouton une action est réalisée et change l'affichage sur l'écran. L'action réalisée peut varier en complexité : elle peut entraîner l'affichage de la page suivante du document, ou peut exécuter une liaison hypertexte interne pour qu'une information contenue dans le même document, ou un autre document, soit mise à jour sur seulement une partie de l'écran d'affichage. Le document est stocké dans la mémoire d'une manière qui permet à l'écran d'affichage d'être renouvelé directement à partir de la mémoire. Quand une partie d'un document mise à jour est reçue par le récepteur, cette partie de la mémoire est mise à jour.

Ce brevet décrit l'utilisation de la mise en piles ou en blocs de documents, puis quelques piles du document sont modifiées.

Selon l'invention, c'est grâce aux fichiers indexés qu'il y a comparaison. C'est après la comparaison qu'il y a éventuellement téléchargement uniquement de ce qui est modifié.
- IEEE Journal on selected areas in communication, vol. 3, N° 3, Mai 1985, New York US, pages 457-467, XPOO2041125, D.K. GIFFORD et AL : "The application of digital broadcast communication to large scale information systems", alinea I, alinea II : ce document décrit un procédé permettant de télécharger une nouvelle version toutes les quatre heures ou quand cela est nécessaire.

Le procédé selon l'invention veut justement éviter ce genre de problème.

Dans ce document, l'ensemble des données est porté par les disques numériques. Il sera nécessaire pour chaque abonné d'effectuer le téléchargement sur son poste du contenu complet du ou des disques qui l'intéresse(nt). Les communications s'effectuant par le réseau téléphonique, si la distance entre le serveur et le poste de l'abonné est importante, le coût financier sera prohibitif. De plus, les données, qui peuvent être confidentielles, sont transmises par un seul réseau, de ce fait, la protection n'est pas toujours assurée.

On connaît du document EP-A-0.460.869 un système d'accès à des données, un appareil d'affichage et une méthode d'enregistrement et d'affichage. Dans ce document, un ordinateur personnel comprend une base de données et un CD-ROM apte à fournir des images en vue de leur affichage. La base de données contient quant à elle des détails se rapportant à ces images. La base de données peut être obtenue depuis un fabricant par une communication par modem.

Outre l'application particulière à des images illustrées, ce document n'assure pas une mise à jour des données par le biais d'une comparaison entre les données du fabricant et celles de la base.

Le document US-A-5.347.632 présente un réseau informatique interactif qui permet à un usager d'afficher une information souhaitée. Selon une variante, ce document prévoit une vérification des fichiers à la disposition de l'usager, par une comparaison avec les données du réseau.

Il ressort du texte même de ce document que cette vérification augmente fortement le temps de travail nécessaire à l'affichage des données souhaitées. Cette vérification s'avère très pénalisante pour la rapidité du système.

Les progrès techniques des communications et leur accès au plus grand nombre ont induit un accroissement considérable des transferts d'informations au format numérique. Sans extrapoler vers la limitation physique du nombre d'émissions possibles par ondes radioélectriques ou câbles, la simple nécessité commerciale pour les opérateurs de réseaux de rentabiliser leurs investissements amène à supposer que le coût d'utilisation de réseaux sera ou restera proportionnel à la quantité de données transférées. A vitesse de transfert égale, il sera proportionnel au temps d'utilisation.

Dans ce contexte, la présente invention apparaît comme une alternative judicieuse pour minimiser les quantités d'informations à transférer tout en conservant l'avantage de disposer de l'information la plus récente. Ce système entraîne pour l'utilisateur final une optimisation de la vitesse d'affichage des informations, d'une part, par un gain important du temps nécessaire à un programme pour décider du choix de l'acquisition de nouvelles données ou de l'utilisation de données existantes, et d'autre part, en ne chargeant de nouvelles données que si c'est nécessaire.

La présente invention a trait à deux procédés et à deux dispositifs de mise en oeuvre de ces procédés qui sont d'un coût de fonctionnement très faible, et dont l'installation est aisée, et qui sont d'un meilleur niveau de sécurité.

Pour se faire, certaines informations qui sont non modifiables sont inscrites sur un disque numérique associé via un lecteur à un poste d'abonné. Le serveur, pour sa part, comporte quelques données modifiables qui peuvent être transmises vers chaque poste, à la demande de l'abonné concerné, pour qu'un affichage soit possible au niveau du poste dudit abonné, d'une part, des informations portées par le disque et, d'autre part, des données transmises.

Il découle de cet état de fait que le coût de fonctionnement est faible et que la sécurité est absolue puisque seule une petite partie des données et informations affichées transite via le réseau.

A cet effet, et selon un premier mode de fonctionnement, l'invention concerne un procédé de transmission et d'affichage de données régulièrement mises à jour à partir d'un serveur central et à destination d'au moins un poste d'abonné, via un réseau de communication numérique, où chaque abonné qui désire connaître les données mises à jour, connecte son poste au serveur, caractérisé en ce que le serveur assure la transmission automatique des données numériques vers ledit poste où un logiciel permet :
- de comparer les données précédemment stockées en mémoire aux nouvelles données transmises,
- de ne pas enregistrer les données disponibles sur le serveur si les données stockées sont identiques, ou d'activer la transmission et d'enregistrer lesdites données en lieu et place desdites données stockées si celles-ci sont différentes,
- d'afficher simultanément les données enregistrées et stockées et les principales informations provenant de la lecture d'un disque numérique, d'une disquette ou autre associé(e) au poste de l'abonné.

Selon un second mode de fonctionnement, l'invention concerne un procédé de transmission et d'affichage de données régulièrement mises à jour à partir d'un serveur central et à destination d'au moins un poste d'abonné, via un réseau de communication numérique, où chaque abonné qui désire connaître les données mises à jour, connecte son poste au serveur, caractérisé en ce que le serveur assure la transmission automatique des données numériques vers ledit poste où un logiciel permet d'afficher simultanément les données transmises et les informations provenant de la lecture d'un disque numérique, d'une disquette ou autre associé(e) au poste de l'abonné.

Selon un autre mode de réalisation, un fichier appelé "index" est utilisé. Au départ, les données sont enregistrées sur un support magnétique, optique ou magnéto-optique.

Les nouvelles données, sur un serveur distant, sont régulièrement mises à jour par l'éditeur du contenu des supports.

Le serveur distant comporte un fichier appelé "index", comportant les informations relatives à la version des supports informatiques compatibles avec les données mises à disposition sur le serveur, au nom et à l'emplacement des fichiers disponibles, et leur caractéristiques (date et taille en octets).

Lors de la mise en lecture de l'application présente sur le support informatique, le programme effectue une première connexion avec le serveur et charge le fichier "index".

Celui-ci ne comportant que les informations minimales est donc téléchargé très rapidement.

Dès lors le programme va comparer les informations contenues par ce fichier "index" et les informations sur les fichiers présents localement sur le ou les supports de stockages informatiques de l'utilisateur. S'il apparaît que le fichier présent sur le serveur est plus récent que le fichier local ou que le fichier local a été modifié, le programme réalise alors une mise à jour du fichier en téléchargeant celui présent sur le serveur.

La finesse de la mise à jour est dépendante de la fréquence de chargement du fichier "index". Celui-ci peut être déclenché automatiquement suivant un calendrier, un délai ou à la demande de l'utilisateur.

Cette technique est particulièrement intéressante dans le cadre de mises à jour à périodicité connue, largement supérieure au temps nécessaire à un transfert complet des fichiers du serveur vers l'utilisateur.

Contrairement à la technique du web dans laquelle l'utilisateur doit chercher l'information qu'il désire acquérir, le procédé selon l'invention permet à l'éditeur du programme initial de décider lui-même des fichiers à mettre à jour et à quel moment.

Selon un autre mode de réalisation du procédé, le fichier "index" du serveur est généré automatiquement lors de la connexion d'un utilisateur par un programme présent sur le serveur.

Le fichier "index" comporte également la date de la prochaine modification des fichiers présents sur le serveur.

Les informations sont enregistrées sur le même support que celui contenant l'application initiale (CD réinscriptible).

L'invention concerne également un dispositif permettant la mise en oeuvre du procédé, selon le premier mode de fonctionnement, qui est caractérisé par le fait qu'il comporte :
- un serveur central contenant des données régulièrement mises à jour,
- un réseau de communication numérique pour le transfert des données du serveur vers au moins un poste d'abonné,
- au moins un poste d'abonné, chaque poste étant constitué, d'une part, d'un système de stockage d'un fichier indexé comportant des données déjà transmises par ledit serveur et enregistrées et, d'autre part, d'un système de comparaison d'un fichier indexé contenant les données disponibles sur le serveur et le fichier indexé contenant les données enregistrées ou stockées afin de conserver les données stockées, s'il n'y a pas de modifications dans les fichiers indexés transmis, ou d'effectuer le téléchargement et remplacer les données stockées par les données disponibles au niveau des fichiers indexés sur ledit serveur, transmises s'il y a eu des modifications,
- un lecteur de disques numériques, de disquettes ou autres, pour chaque poste d'abonné, et
- un moyen d'affichage simultané des fichiers indexés contenant les données stockées et les informations du disque, de la disquette ou autre par poste d'abonné.

L'invention concerne encore un dispositif permettant la mise en oeuvre du procédé, selon le second mode de fonctionnement, qui est caractérisé par le fait qu'il comporte :
- un serveur central contenant des données régulièrement mises à jour,
- un réseau de communication numérique pour le transfert des données du serveur vers au moins un poste d'abonné,
- au moins un poste d'abonné,
- un lecteur de disques numériques, de disquettes ou autres, pour chaque poste d'abonné, et
- un moyen d'affichage simultané des données transmises et des informations du disque, de la disquette ou autre par poste d'abonné.

Quel que soit le mode de réalisation du dispositif, le réseau de communication utilisé est le réseau téléphonique.

De plus, le poste d'abonné est un ordinateur personnel, le lecteur et le disque numérique sont constitués par un disque optique compact à lecture laser, et le moyen d'affichage est un écran.

D'une part, le disque numérique comporte des informations non modifiables dont certains espaces prévus à cet effet sont vierges, d'autre part, les données stockées sont destinées à être mises en place au niveau de ces espaces lors de l'affichage.

Les dessins ci-joints sont donnés à titre d'exemples indicatifs et non limitatifs. Ils représentent deux modes de réalisation selon l'invention. Ils permettront de comprendre aisément l'invention.

La figure 1 représente une vue schématique du dispositif selon un premier mode de réalisation de l'invention, pour permettre la mise en oeuvre du premier mode de fonctionnement du procédé.

La figure 2 représente une vue schématique du dispositif selon un second mode de réalisation de l'invention, pour permettre la mise en oeuvre du second mode de fonctionnement du procédé.

La présente invention concerne deux procédés de transmission et d'affichage de données ainsi que deux dispositifs permettant leur mise en oeuvre.

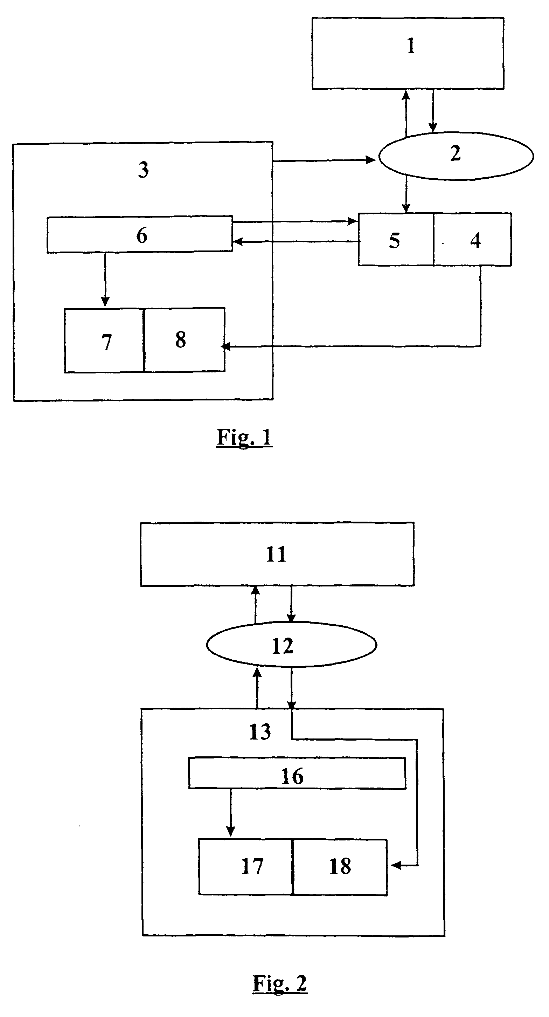

Selon la figure 2, un mode de réalisation simplifié du dispositif selon l'invention est représenté.

Celui-ci comporte essentiellement un serveur central 11 qui est situé à distance d'un poste d'abonné 13. Le serveur 11 et le poste d'abonné 13 sont reliés l'un à l'autre par réseau de communication 12, qui peut être constitué également par un réseau téléphonique.

Bien entendu, le serveur 11 peut être connecté avec un nombre très important de postes d'abonnés 13. Pour faciliter la compréhension, un seul poste 13 a été représenté sur les figures.

Chaque poste 13 est constitué d'un lecteur 16 de disques numériques, chaque disque numérique comportant, d'une part, des informations 17 et, d'autre part, des espaces libres 18 pour permettre la réception des données provenant du serveur 11.

Il est donc évident que ce système pourra être utilisé par des sociétés qui fabriquent, revendent ou possèdent un réseau de distribution. Si ces entreprises désirent mettre un lien électronique à la disposition des revendeurs, le système selon l'invention sera tout à fait adapté. Il permettra d'assurer un service commercial, en permettant de conserver une présence permanente, que ne peut assurer un personnel commercial. Il permet d'autre part, par son réseau, des commandes rapides et fiables, ce qui contraste avec les anciennes techniques de contact téléphonique qui nécessitent un standard et un archivage des commandes par télécopie. De plus, ce système permet également d'assurer un service d'après-vente par la mise à jour des fichiers techniques et par la commande des pièces de façon simplifiée.

Ainsi, si un revendeur a besoin de connaître le prix d'un matériel ou les promotions qui touchent certains produits d'un catalogue, celui-ci pourra mettre le disque numérique en lecture pour avoir des informations générales du catalogue, comme, par exemple, présentation, références, figures, etc. Le serveur 11 par l'intermédiaire du réseau 12 va transmettre les données qui ne sont pas présentes au niveau du disque numérique. Il peut s'agir de valeurs qui sont souvent modifiables, comme, par exemple, le prix, les quantités en stock, ou si l'article fait l'objet d'une promotion.

Le procédé de transmission et d'affichage, selon l'invention, va donc permettre, au niveau de l'écran du revendeur, d'avoir un document à jour, comportant, d'une part, les informations portées par le disque numérique, qui sont fixes, et d'autre part, les données provenant du serveur 11, qui, elles, sont variables, mais qui seront toujours mises à jour.

Il découlera de ceci que le temps de connexion entre le poste d'abonné 13 et le serveur 11 sera minimisé par une transmission uniquement des données variables. Le coût en sera très faible, et les données transmises n'étant pas liées avec les informations du disque numérique, elles seront forcément sécurisées car incompréhensibles pour toute personne qui arriverait à en prendre connaissance, en l'absence des informations du disque compact.

Selon la figure 1, le mode de réalisation du dispositif peut être un peu plus complexe pour assurer un service encore plus performant.

Selon cette variante, entre le serveur 1 et le poste d'abonné 3 sont ajoutés au niveau dudit poste 3, d'une part, un système de stockage 4 de données et, d'autre part, un système de comparaison 5 des données stockées par rapport aux données transmises.

Dans ce mode de fonctionnement, le revendeur, au niveau du poste 3, va se connecter sur le serveur 1, via le réseau de communication numérique 2. Le serveur 1 va ensuite transmettre les données concernant les fichiers qu'il possède via le réseau numérique 2 au système de comparaison 5 du poste d'abonné 3. Au niveau de ce système de comparaison 5 sont déjà stockées les données reçues précédemment. Si les données concernant les fichiers disponibles sur le serveur et celles des fichiers stockés sont identiques, il n'y a aucun changement au niveau des données stockées. Par contre, si les données reçues font apparaître un changement par rapport aux données stockées, les nouvelles données seront téléchargées et remplaceront les anciennes données stockées. Ce stockage s'effectue au niveau du système 4.

Comme sur la figure 1, chaque poste 3 est constitué d'un lecteur 6 de disques numériques, chaque disque numérique comportant, d'une part, des informations 7 et, d'autre part, des espaces libres 8 pour permettre la réception des données provenant du serveur 1.

Lorsque le revendeur veut visionner le catalogue de son fournisseur, il lui suffira de lire sur l'écran les informations provenant du disque 7 et les données qui sont stockées au niveau du système de stockage 4 et qui viendront prendre place sur l'écran au niveau des espaces libres 8 du disque numérique.

Un tel système peut permettre de valoriser des produits et des services, de fidéliser les revendeurs multi-marques, de motiver les réseaux de revendeurs, de mettre à jour très rapidement l'ensemble des données variables, de gérer les stocks le plus rapidement possible, d'avoir un retour d'information rapide, et enfin de minimiser les services téléphoniques de vente et d'après-vente.

Les objectifs techniques sont la simplicité de mise en oeuvre du serveur et des systèmes clients, le contrôle et la facilité de la mise à jour des données, la compatibilité clients multi-plate-forme, et la gestion de connexions simultanées non limitée.

Enfin, l'objectif financier est de minimiser les coûts de télécommunication, de mise en oeuvre du serveur et de formation et de maintenance liés au serveur.

En ce qui concerne le client, celui-ci aura une information riche et fiable, une rapidité d'accès à ces informations, des coûts de matériel nécessaire à la connexion qui sont faibles, puisque ce système est utilisable avec un ordinateur individuel classique, une simplicité d'emploi et enfin une réduction des temps de commandes.

Dans une approche technique du problème, on peut supposer que le produit nécessite un code de 8 caractères et un produit de 8 caractères également, ajoutons à cela 8 caractères pour des informations de taille, de couleur, etc. Il en résulte qu'un produit correspondra à 24 octets de données.

Pour un catalogue de 10 000 articles, le poids d'informations sera donc de 240 000 octets, soit 234,3 Ko. Dans ces conditions et dans le cas d'une configuration courante permettant une liaison à 2 Ko par seconde, le temps de transfert pour la totalité des informations sera très bref, de l'ordre de 100 secondes, et le nombre d'articles mis à jour très important.

### REFERENCES

- 1.: Serveur central
- 2.: Réseau de communication numérique
- 3.: Poste d'abonné
- 4.: Système de stockage du poste 3
- 5.: Système de comparaison du poste 3
- 6.: Lecteur de disques numériques
- 7.: Informations portées par le disque numérique
- 8.: Espaces libres du disque numérique recevant les données du serveur 1
- 11.: Serveur central
- 12.: Réseau de communication numérique
- 13.: Poste d'abonné
- 16.: Lecteur de disques numériques
- 17.: Informations portées par le disque numérique
- 18.: Espaces libres du disque numérique recevant les données du serveur 11

## Revendications

1. Procédé de transmission de données à partir d'un serveur central (1, 11) et à destination d'au moins un poste d'abonné (3, 13), via un réseau de communication numérique (2, 12) où chaque abonné qui désire connaître les données connecte son poste (3, 13) au serveur (1, 11), ledit poste (3, 13) étant associé à au moins un support informatique tel un disque numérique ou une disquette pour en lire les données stockées, permettant l'affichage simultané de données issues du serveur central (1, 11) et du support informatique au niveau du poste (3, 13) de l'abonné,
**caractérisé par le fait**
**qu'**on met à jour les fichiers de données stockés sur le support informatique depuis le serveur central (1, 11) par :
- création d'un fichier index au niveau du serveur central, ledit fichier index comportant des informations relatives aux fichiers de données disponibles au niveau du serveur (1, 11);
- transmission du fichier index vers le poste (3, 13) de l'abonné ;
- comparaison des informations contenues dans le fichier index et de la version des fichiers présents localement au niveau du support informatique ;
- téléchargement des fichiers à partir du serveur central (1, 11) si la comparaison révèle qu'ils sont différents de ceux présents localement au niveau du support informatique.

2. Procédé selon la revendication 1 **caractérisé par le fait**
**qu'**on transmet le fichier index au poste (3, 13) de l'abonné, de façon automatique, à chaque lancement de l'application présente sur le support informatique.

3. Procédé selon la revendication 1 **caractérisé par le fait**
**qu'**on transmet le fichier index au poste (3, 13) de l'abonné, de façon automatique, suivant une périodicité donnée.

4. Procédé selon la revendication 1 **caractérisé par le fait**
**qu'**on transmet le fichier index au poste de l'abonné (3, 13) à la demande de l'abonné.

5. Procédé selon l'une quelconque des revendications 1 à 4 **caractérisé par le fait**
**qu'**on stocke les fichiers téléchargés à partir du serveur (1, 11) central sur ledit support informatique.

6. Procédé selon l'une quelconque des revendications 1 à 5 **caractérisé par le fait**
**que** les informations contenues dans le fichier index sont relatives à la version, au nom, à l'emplacement et aux caractéristiques de taille et de date de fichiers disponibles au niveau du serveur central (1, 11).

7. Procédé selon la revendication 6 **caractérisé par le fait**
**que** le fichier index comporte la date de la prochaine modification des fichiers.

8. Système de transmission de données à partir d'un serveur central (1, 11) et à destination d'au moins un poste d'abonné (3, 13), via un réseau de communication numérique (2, 12) où chaque abonné qui désire connaître les données connecte son poste (3, 13) au serveur (1, 11), ledit poste (3, 13) étant associé à au moins un support informatique tel un disque numérique ou une disquette pour en lire les données stockées, permettant l'affichage simultané de données issues du serveur central (1, 11) et du support informatique au niveau du poste (3, 13) de l'abonné, pour la mise en oeuvre du procédé selon l'une des revendications 1 à 7, **caractérisé par**
- le serveur central (1, 11) comportant un fichier index comportant des informations relatives aux fichiers de données disponibles au niveau du serveur central (1, 11),
- le réseau de communication (2, 12) étant adapté pour transmettre le fichier index vers le poste de l'abonné (3, 13),
- un système de comparaison (5) au niveau du poste de l'abonné apte à comparer les informations contenues dans le fichier index et la version des fichiers présents localement au niveau du support informatique,
- un moyen pour télécharger les fichiers depuis le serveur central (1, 11) vers le poste de l'abonné (3, 13)
si le système de comparaison (5) révèle qu'ils sont différents de ceux présents localement au niveau du support informatique,
- un moyen pour la mise à jour des fichiers de données stockés sur le support informatique au niveau du poste de l'abonné (3, 13).

## Patentansprüche

1. Datenübertragungsverfahren, bei dem die Daten von einem Zentralserver (1, 11) aus über ein digitales Datenübertragungsnetz (2, 12) an mindestens eine Teilnehmerstation (3, 13) gesandt werden, bei dem jeder Teilnehmer, der die Daten kennen möchte, seine Station (3, 13) an den Server (1, 11) anschließt, wobei die Station (3, 13), die mindestens einem Datenträger, zum Beispiel einer CD oder einer Diskette zugeordnet ist, um die auf diesen gespeicherten Daten zu lesen, die gleichzeitige Anzeige der aus dem Zentralserver (1, 11) und der von dem Datenträger der Station (3, 13) des Teilnehmers stammenden Daten ermöglicht, **gekennzeichnet dadurch,**
**dass** die vom Zentralserver (1, 11) eingegangenen, auf dem Datenträger gespeicherten Daten aktualisiert werden durch
- Anlegen einer Index-Datei im Zentralserver, die Informationen betreffend die im Server (1, 11) verfügbaren Daten-Dateien enthält,
- Übertragung der Index-Dateien in die Teilnehmerstation (3, 13),
- Vergleich der Informationen in der Index-Datei mit der lokal auf dem Datenträger vorhandenen Version der Dateien,
- Fernladen der Dateien vom Zentralserver (1, 11), wenn der Vergleich ergibt, dass sie sich von denen, die lokal auf dem Datenträger vorhanden sind, unterscheiden.

2. Verfahren gemäß Anspruch 1, **gekennzeichnet dadurch,**
**dass** die Index-Datei automatisch, bei jedem Start des auf dem Datenträger vorhandenen Anwenderprogramms an die Teilnehmerstation (3, 13) übertragen wird.

3. Verfahren gemäß Anspruch 1, **gekennzeichnet dadurch,**
**dass** die Index-Datei in regelmäßigen, festgelegten Abständen automatisch an die Teilnehmerstation (3, 13) übertragen wird.

4. Verfahren gemäß Anspruch 1, **gekennzeichnet dadurch,**
**dass** die Index-Datei auf Anforderung des Teilnehmers an die Teilnehmerstation (3, 13) übertragen wird.

5. Verfahren gemäß einem der Ansprüche 1 bis 4, **gekennzeichnet dadurch,**
**dass** die vom Zentralserver (1, 11) ferngeladenen Dateien auf dem genannten Datenträger gespeichert werden.

6. Verfahren gemäß einem der Ansprüche 1 bis 5, **gekennzeichnet dadurch,**
**dass** sich die in der Index-Datei enthaltenen Informationen auf die Version, den Namen, den Speicherplatz und Merkmale wie Größe und Datum der im Zentralserver (1, 11) verfügbaren Dateien beziehen.

7. Verfahren gemäß Anspruch 6, **gekennzeichnet dadurch,**
**dass** die Index-Datei das Datum der nächsten Änderung der Dateien enthält.

8. Datenübertragungssystem, bei dem die Daten von einem Zentralserver (1, 11) aus über ein digitales Datenübertragungsnetz (2, 12) an mindestens eine Teilnehmerstation (3, 13) gesandt werden, bei dem jeder Teilnehmer, der die Daten kennen möchte, seine Station (3, 13) an den Server (1, 11) anschließt, wobei die Station (3, 13), die mindestens einem Datenträger, zum Beispiel einer CD oder einer Diskette zugeordnet ist, um die auf diesen gespeicherten Daten zu lesen, die gleichzeitige Anzeige der aus dem Zentralserver (1, 11) und der von dem Datenträger der Station (3, 13) des Teilnehmers stammenden Daten ermöglicht, zur Umsetzung des Verfahren gemäß einem der Ansprüche 1 bis 7, das **gekennzeichnet ist, durch**
- den Zentralserver (1, 11), in dem eine Index-Datei mit Informationen betreffend die im Zentralserver (1, 11) verfügbaren Daten-Dateien abgelegt ist,
- das Datenübertragungsnetz (2, 12), das zur Übertragung der Index-Dateien an eine Teilnehmerstation (3, 13) geeignet ist,
- ein Vergleichssystem (5) auf Ebene der Teilnehmerstation, das zum Vergleich der Informationen in der Index-Datei mit der lokal auf dem Datenträger vorhandenen Version der Dateien geeignet ist,
- ein Mittel zum Fernladen der Dateien vom Zentralserver (1, 11) in die Teilnehmerstation (3, 13), wenn das Vergleichssystem (5) erkennt, dass sie sich von denen, die lokal auf dem Datenträger vorhanden sind, unterscheiden,
- ein Mittel zur Aktualisierung der Daten-Dateien, die auf dem Datenträger auf Ebene der Teilnehmerstation (3, 13) gespeichert sind.

## Claims

1. Process for the transmission of data from a central server (1, 11) and to at least one subscriber station (3, 13) via a digital communication network (2, 12) in which each subscriber who wishes to obtain data connects his station (3, 13) to the server (1, 11), said station (3, 13) being associated with at least one computer support such as a digital disc or floppy disc so that it can read the data stored on them, thereby allowing the simultaneous display of data from the central server (1, 11) and the computer support at the subscriber station (3, 13),
**characterised in that**
the data files stored on the computer support are updated from the central server (1, 11) by:
- creation of a index file on the central server, the aforementioned index file consisting of information relating to the data files available at server level (1, 11):
- transmission of the index file to the subscriber station (3, 13);
- comparison of the information contained in the index file and the version of the files present locally at the computer support level;
- downloading of the files from central server (1, 11) if the comparison reveals that they differ from those present locally at computer support level.

2. Process according to claim 1 **characterised in that**
the index file is transmitted to the subscriber station (3, 13) automatically on each start up of the present application on the computer support.

3. Process according to claim 1 **characterised in that**
the index file is transmitted to the subscriber station (3, 13) automatically at a given periodicity.

4. Process according to claim 1 **characterised in that**
the index file is transmitted to the subscriber station (3, 13) on the request of the subscriber.

5. Process according to any of claims 1 to 4 **characterised in that**
the files downloaded from the central server (1, 11) are stored on the aforesaid computer support.

6. Process according to any of claims 1 to 5 **characterised in that**
the information contained in the index file relates to the version, name, location and the size and date characteristics of the files available at the central server (1, 11).

7. Process according to claim 6 **characterised in that**
the file index includes the date of the next modification of the files.

8. Device for transmission of data from a central server (1, 11) to at least one subscriber station (3, 13), via a digital communication network (2, 12) on which each subscriber who wishes to obtain data connects his station (3, 13) to the server (1, 11), said station (3, 13) being associated with at least one computer support such as a digital disc or floppy disc so that it can read the data stored on them, thereby allowing simultaneous display of data from the central server (1, 11) and the computer support at the subscriber station (3, 13), for the application of the process according to one of claims 1 to 7 **characterised in that**
- the central server (1, 11) includes an index file with information relating to the data files available at the central server (1, 11),
- the communication network (2, 12) is adapted in order to transmit the index file to the subscriber station (3, 13),
- a comparison system (5) at the subscriber station with the capacity to compare the information contained in the index file with the version of the files present locally on the computer support,
- a means for downloading the files from the central server (1, 11) to the subscriber station (3, 13)
if comparison system (5) shows that they differ from those present locally at the computer support,
- a means for updating the data files stored on the computer medium at the subscriber station (3, 13).
